# EUROPEAN PATENT APPLICATION

(11) **EP 2 458 670 A1**
(43) Date of publication of application: **30.05.2012**
(21) Application number: 10802172.6
(22) Date of filing: 06.07.2010
(51) Int. Cl.: H01M 10/0562, H01M 10/052, H01M 10/058

(54) **NONAQUEOUS ELECTROLYTE BATTERY AND SOLID ELECTROLYTE FOR NONAQUEOUS ELECTROLYTE BATTERY**

(30) Priority: 22.07.2009 JP 2009171640
(71) Applicant: Sumitomo Electric Industries, Ltd., Chuo-ku Osaka-shi Osaka 541-0041 (JP)
(72) Inventor: OGAWA, Mitsuyasu, Itami-shi Hyogo 664-0016 (JP); KANDA, Ryoko, Itami-shi Hyogo 664-0016 (JP); OTA, Nobuhiro, Itami-shi Hyogo 664-0016 (JP)
(74) Representative: Setna, Rohan P.
(86) International application number: PCT/JP2010/061457
(87) International publication number: WO 2011/010552

(57) **Abstract**

Provided are a nonaqueous electrolyte battery that can suppress internal short circuits due to growth of dendrites from a negative electrode and has high charge-discharge cycle capability; and a solid electrolyte with which the charge-discharge cycle capability of a nonaqueous electrolyte battery can be improved by using the solid electrolyte as a solid electrolyte layer of the nonaqueous electrolyte battery. The nonaqueous electrolyte battery includes a positive electrode, a negative electrode, and a solid electrolyte layer interposed between these electrodes, wherein the solid electrolyte layer includes a high-sulfur-content portion containing 10 mol% or more of elemental sulfur. The solid electrolyte for a nonaqueous electrolyte battery includes a high-sulfur-content portion containing 10 mol% or more of elemental sulfur.

## Description

### Technical Field

The present invention relates to a nonaqueous electrolyte battery and a solid electrolyte for a nonaqueous electrolyte battery, in particular, to a nonaqueous electrolyte battery that can suppress internal short circuits due to growth of dendrites from a negative electrode and has high charge-discharge cycle capability.

### Background Art

Nonaqueous electrolyte batteries have been used as power supplies of relatively small electric devices such as portable devices. A representative example of such nonaqueous electrolyte batteries is a lithium-ion secondary battery (hereafter, simply referred to as a lithium secondary battery), which uses deintercalation and intercalation reactions of lithium ions in positive and negative electrodes.

The lithium secondary battery is charged and discharged by transportation of lithium ions between positive and negative electrodes through an electrolyte layer. In recent years, all-solid-state lithium secondary batteries having an electrolyte layer composed of a nonflammable inorganic solid electrolyte instead of an organic electrolytic solution have been studied. For example, bulk batteries having a solid electrolyte layer formed by compacting a powder obtained by pulverizing a Li₂S-containing vitreous solid electrolyte (for example, refer to Patent Literatures 1 and 2) and thin-film batteries having a positive electrode, a negative electrode, and a solid electrolyte layer that are films formed by vapor-phase methods (for example, refer to Patent Literatures 3 and 4) have been proposed.

In addition, for example, Patent Literature 5 discloses a technique of using a sulfide-based solid electrolyte containing 1 wt% or less of elemental sulfur to reduce degradation of battery performance (capacity and output) on charge and discharge.

### Citation List

### Patent Literature

PTL 1: Japanese Unexamined Patent Application Publication No. 8-148180
PTL 2: Japanese Unexamined Patent Application Publication No. 8-138723
PTL 3: Japanese Unexamined Patent Application Publication No. 59-31570
PTL 4: Japanese Unexamined Patent Application Publication No. 10-284130
PTL 5: Japanese Unexamined Patent Application Publication No. 2009-93995

### Summary of Invention

### Technical Problem

In lithium secondary batteries, there are cases where metallic lithium precipitates in the form of dendrites on the surface of a negative electrode on charge. The dendrites grow during repeated charge and discharge and reach a positive electrode to cause an internal short circuit. This causes a decrease in cycle life, which has been regarded as a problem. However, in existing batteries, the growth of dendrites cannot be prevented and it has been difficult to achieve sufficiently high charge-discharge cycle capability.

The present invention has been accomplished under such circumstances. An object of the present invention is to provide a nonaqueous electrolyte battery having high charge-discharge cycle capability. Another object is to provide a solid electrolyte with which the charge-discharge cycle capability of a nonaqueous electrolyte battery can be improved by using the solid electrolyte as a solid electrolyte layer of the nonaqueous electrolyte battery.

### Solution to Problem

The inventors of the present invention have performed thorough studies and, as a result, have found that addition of elemental sulfur in a large amount to a solid electrolyte layer of a battery can improve the cycle life of the battery.

An internal short circuit of a battery is probably caused by growth of dendrites of metallic lithium through gaps in the powder of a solid electrolyte layer in the case of a bulk battery or through film-formation defects such as pin holes in a solid electrolyte layer in the case of a thin-film battery. However, when elemental sulfur is present in such a solid electrolyte layer, a reaction represented by 2Li + S → Li₂S occurs and metallic lithium is turned into the insulating compound. Thus, the growth of dendrites can be suppressed and internal short circuits can be probably suppressed.

Elemental sulfur is a sulfur having zero valence, which does not react with lithium ions. Stated another way, elemental sulfur is a sulfur that is not bonded to elements other than sulfur. For example, although a sulfide-based solid electrolyte contains sulfur as a component, the sulfur is normally bonded to lithium, phosphorus, or the like in the solid electrolyte to form a sulfide and the sulfur has - (minus) 2 valence. Such a sulfur forming a sulfide is not elemental sulfur.

The present invention has been accomplished on the basis of such findings. Hereinafter, the present invention will be described.

(1) A nonaqueous electrolyte battery according to the present invention includes a positive electrode, a negative electrode, and a solid electrolyte layer interposed between these electrodes, wherein the solid electrolyte layer includes a high-sulfur-content portion containing 10 mol% or more of elemental sulfur.

A solid electrolyte for a nonaqueous electrolyte battery according to the present invention includes a high-sulfur-content portion containing 10 mol% or more of elemental sulfur.

Since a nonaqueous electrolyte battery according to the present invention includes, in a solid electrolyte layer, a high-sulfur-content portion containing 10 mol% or more of elemental sulfur, the growth of dendrites of metallic lithium is effectively suppressed and internal short circuits can be suppressed. Accordingly, the nonaqueous electrolyte battery has high charge-discharge cycle capability.
By using a solid electrolyte according to the present invention as a solid electrolyte layer of a nonaqueous electrolyte battery, the charge-discharge cycle capability of the battery can be improved.

In the present invention, a solid electrolyte layer (or solid electrolyte) may be constituted by a high-sulfur-content portion only or may be constituted by a combination of a high-sulfur-content portion and another region as described below. Herein, the content of elemental sulfur is a ratio (B/A) of the number of moles (B) of elemental sulfur in a high-sulfur-content portion to the number of moles (A) of all the elements constituting the portion.

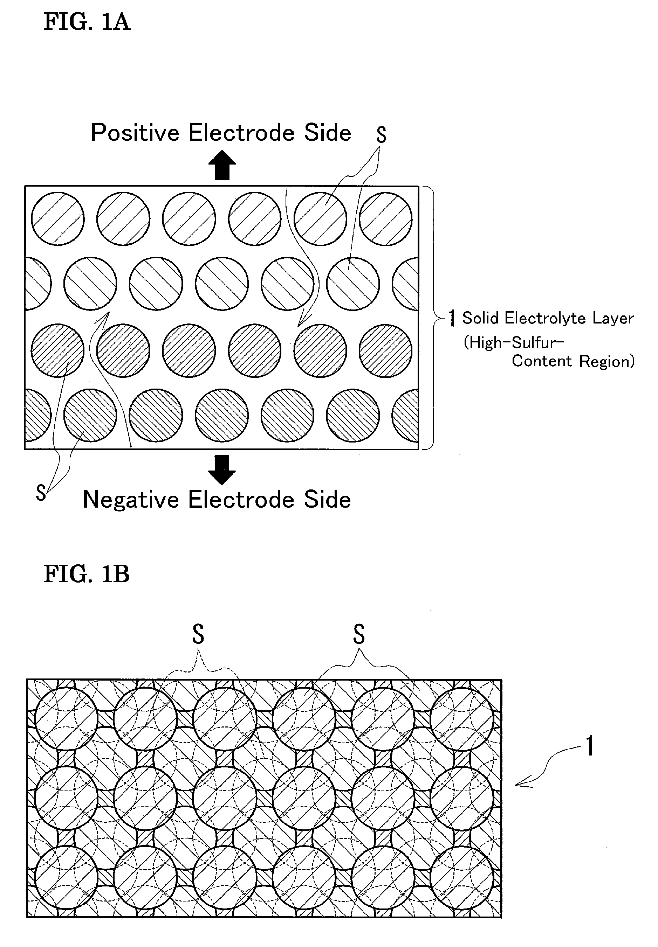

A concept of the present invention will be described with reference to Figs. 1A and 1B. Figure 1A is a conceptual view illustrating a section of a high-sulfur-content portion of a solid electrolyte layer, the section being taken in the thickness direction of the high-sulfur-content portion. Figure 1B is a conceptual view illustrating a plane of a high-sulfur-content portion of a solid electrolyte layer.

Since elemental sulfur S present in a solid electrolyte layer (high-sulfur-content portion) 1 does not have lithium-ion conductivity, lithium ions on charge and discharge of a battery move through gaps in the elemental sulfur S as represented by thin arrows in Fig. 1A. Thus, it is desirable that elemental sulfur be uniformly distributed. In a plane direction of a high-sulfur-content portion, it is desirable that elemental sulfur be evenly distributed in the plane direction to certainly trap dendrites of metallic lithium. As illustrated in Fig. 1B, it is ideal that the elemental sulfur S present in the thickness direction partially overlaps each other in plan view so as to be evenly distributed in the plane direction and the elemental sulfur S is uniformly distributed.

The higher the content of elemental sulfur in a high-sulfur-content portion, the larger the amount of elemental sulfur that is to react with metallic lithium and the greater the effect of suppressing the growth of dendrites of metallic lithium. However, on the other hand, the higher the content of elemental sulfur in a high-sulfur-content portion, the smaller the number of paths along which lithium ions move and the higher the internal resistance of a battery. Thus, in the present invention, the content of elemental sulfur in a high-sulfur-content portion should be appropriately determined in view of a desired balance between the effect of suppressing the growth of dendrites and the internal resistance, and may be, for example, 10 mol% or more and 90 mol% or less. When the content of elemental sulfur is less than 10 mol%, the growth of dendrites cannot be effectively suppressed. When the content of elemental sulfur is more than 90 mol%, the internal resistance tends to become excessively high. The content of elemental sulfur is preferably 10 mol% or more and 70 mol% or less. The lower limit of the content of elemental sulfur is more preferably more than 10 mol%.

(2) In a battery according to a preferred embodiment of the present invention, a content of elemental sulfur in the solid electrolyte layer varies stepwise or continuously in a thickness direction from one of the electrodes to another one of the electrodes; and in the solid electrolyte layer, at least one of a near-interface region with respect to the positive electrode and a near-interface region with respect to the negative electrode contains less than 10 mol% of elemental sulfur, and a region other than the near-interface regions includes the high-sulfur-content portion. The term "near-interface region" denotes a surface of the solid electrolyte layer in contact with such an electrode and/or a region within the solid electrolyte layer close to the surface.

In a solid electrolyte for a nonaqueous electrolyte battery according to a preferred embodiment, a content of elemental sulfur varies stepwise or continuously in a thickness direction from a front surface to a back surface of the solid electrolyte; and, in the solid electrolyte, at least one of a front-surface-side region and a back-surface-side region contains less than 10 mol% of elemental sulfur, and a region other than the regions includes the high-sulfur-content portion. The term "at least one of a front-surface-side region and a back-surface-side region" denotes at least one of the front and back surfaces of the solid electrolyte and/or at least one of a region within the solid electrolyte close to the front surface and a region within the solid electrolyte close to the back surface.

Electrons are likely to be supplied from an electrode to the interface between the electrode and a solid electrolyte layer. Thus, when elemental sulfur is present in a near-interface region of the solid electrolyte layer with respect to the electrode, elemental sulfur may react with lithium ions having moved through the solid electrolyte layer (2Li⁺ + S + 2e⁻ → Li₂S). As a result, movement of lithium ions in the solid electrolyte layer is inhibited and the internal resistance of the battery increases. In contrast, in the above-described configuration, at least one of the near-interface regions with respect to the electrodes (or at least one of the front-surface-side region and the back-surface-side region) contains less than 10 mol% of elemental sulfur and hence an increase in the internal resistance can be suppressed.

(3) In the solid electrolyte layer of a battery according to the present invention, both of the near-interface region with respect to the positive electrode and the near-interface region with respect to the negative electrode preferably contain less than 10 mol% of elemental sulfur, and a region at an intermediate position in the thickness direction preferably includes the high-sulfur-content portion.

In the solid electrolyte for a nonaqueous electrolyte battery, both of the front-surface-side region and the back-surface-side region preferably contain less than 10 mol% of elemental sulfur, and a region at an intermediate position in the thickness direction preferably includes the high-sulfur-content portion. The term "both of the front-surface-side region and the back-surface-side region" denotes the front and back surfaces of the solid electrolyte and/or a region within the solid electrolyte close to the front surface and a region within the solid electrolyte close to the back surface.

When both of the near-interface regions with respect to the positive and negative electrodes (or both of the front-surface-side region and the back-surface-side region) in the solid electrolyte layer (or solid electrolyte) contain less than 10 mol% of elemental sulfur, the above-described factor of inhibiting the movement of lithium ions can be eliminated so that an increase in the internal resistance can be effectively suppressed.

The content of elemental sulfur in such a near-interface region is preferably 5 mol% or less, more preferably 1 mol% or less. The thickness of the near-interface region should be appropriately determined such that electrons are not supplied from the electrode to elemental sulfur in the high-sulfur-content portion and may be, for example, 0.1 µm or more. Similarly, the thickness of at least one of the front-surface-side region and the back-surface-side region in the solid electrolyte and both of the front-surface-side region and the back-surface-side region in the solid electrolyte should be appropriately determined such that electrons are not supplied from the electrodes to elemental sulfur in the high-sulfur-content portion and may be, for example, 0.1 µm or more.

(4) In a battery according to a preferred embodiment of the present invention, the solid electrolyte layer is composed of a sulfide-based solid electrolyte.

Examples of the solid electrolyte forming the solid electrolyte layer include Li₂S-containing sulfide-based solid electrolytes and oxide-based solid electrolytes such as LiPON. In particular, sulfide-based solid electrolytes exhibit high lithium-ion conductivity and are suitable as a material for forming the solid electrolyte layer.
Specific examples of the sulfide-based solid electrolytes include Li₂S-P₂Sₛ-based solid electrolytes, Li₂S-SiS₂-based solid electrolytes, and Li₂S-B₂S₃-based solid electrolytes; and such solid electrolytes may further contain P₂O₅ or Li₃PO₄.

(5) In a battery according to a preferred embodiment of the present invention, the negative electrode is composed of metallic lithium.

Examples of a negative-electrode material include metallic lithium (elemental Li metal); lithium alloys (alloys composed of Li and elements added); carbon (C) in the form of graphite, hard carbon, or the like; silicon (Si); and indium (In). Of these, lithium-containing materials, particularly metallic lithium, are advantageous in view of energy density and are preferable. Examples of the elements added for lithium alloys include aluminum (Al), silicon (Si), tin (Sn), bismuth (Bi), zinc (Zn), and indium (In). Advantageous Effects of Invention

In a nonaqueous electrolyte battery according to the present invention, since a solid electrolyte layer includes a high-sulfur-content portion containing 10 mol% or more of elemental sulfur, high charge-discharge cycle capability is achieved. When a solid electrolyte according to the present invention is used as a solid electrolyte layer of a nonaqueous electrolyte battery, the charge-discharge cycle capability of the nonaqueous electrolyte battery can be improved.

### Brief Description of Drawings

[Fig. 1A] Figure 1A is a conceptual view for explaining a concept of the present invention, the conceptual view illustrating a section of a high-sulfur-content portion of a solid electrolyte layer, the section being taken in the thickness direction of the high-sulfur-content portion.
[Fig. 1B] Figure 1B is a conceptual view for explaining a concept of the present invention, the conceptual view illustrating a plane of a high-sulfur-content portion of a solid electrolyte layer.

### Description of Embodiments

An example of producing a solid electrolyte layer (or solid electrolyte) in the present invention will be first described.

### (In the case of bulk type)

A solid electrolyte layer may be produced by, for example, compacting a powder of a solid electrolyte. Such a powder of a solid electrolyte may be a solid electrolyte in the form of powder or a powder obtained by pulverizing a solid electrolyte. Such a solid electrolyte may be prepared by, for example, mechanical milling or melt quench.

A solid electrolyte layer containing elemental sulfur may be produced by adding a predetermined amount of elemental sulfur to a powder of a solid electrolyte, mixing the resultant mixture, and then compacting the powder mixture. By placing a powder containing elemental sulfur and a powder without elemental sulfur so as to form layers in a mold and integrally compacting the layers, a solid electrolyte layer in which a high-sulfur-content portion is present at a specific position in the thickness direction of the solid electrolyte layer may be produced.

### (In the case of thin-film type)

Alternatively, a solid electrolyte layer may be produced by forming a film by a vapor-phase method using a target of such a powder of a solid electrolyte or a compact formed by compacting the powder. When a solid electrolyte layer containing elemental sulfur is produced, film formation may be performed by, for example, use of a target of a solid electrolyte containing elemental sulfur or combined use of a target of a solid electrolyte and a target of elemental sulfur. Alternatively, for example, targets of a starting material of a solid electrolyte and elemental sulfur are used and a solid electrolyte layer may be formed while elemental sulfur is deposited. By forming a film while the amount of elemental sulfur added is adjusted or the amount of elemental sulfur deposited is adjusted, a solid electrolyte layer in which a high-sulfur-content portion is present at a specific position in the thickness direction of the solid electrolyte layer may be produced.

Examples of the vapor-phase method include physical vapor deposition (PVD) methods such as a vacuum deposition method, a sputtering method, an ion plating method, and a pulsed laser deposition method and chemical vapor deposition (CVD) methods.

### [EXAMPLE 1]

All-solid-state lithium secondary batteries in which the contents of elemental sulfur in solid electrolytes were different were produced and evaluated in terms of charge-discharge cycle capability.

### <Procedures of producing batteries>

A film of LiCoO₂ was formed on a stainless-steel base by a laser ablation method to form a positive electrode having a thickness of 5 µm. After the film was formed, the base on which the positive-electrode film was formed was annealed at 500°C.

A film of LiNbO₃ was then formed on the positive electrode by a sputtering method to form a buffering layer having a thickness of 20 nm. This buffering layer contributes to a decrease in interface resistance at the interface between the positive electrode and a solid electrolyte layer.

A film of a Li₂S-P₂S₅-based solid electrolyte was then formed by a laser ablation method on the buffering layer to form a solid electrolyte layer having a thickness of 15 µm. Herein, a target obtained by adding elemental sulfur to a powder of a solid electrolyte and uniformly mixing the resultant mixture was used so that elemental sulfur was uniformly distributed in the solid electrolyte layer. In addition, by adjusting the amount of elemental sulfur added, the content of elemental sulfur in the solid electrolyte layer was controlled.

A film of Li was then formed by a vacuum deposition method on the solid electrolyte layer to form a negative electrode having a thickness of 1 µm.

Finally, the resultant laminate was contained in a coin-shaped case to complete a coin-shaped all-solid-state lithium secondary battery.

By adjusting the amount of elemental sulfur added, batteries in which the contents of elemental sulfur in the solid electrolyte layers were different (10 batteries for each content) were produced. The batteries were defined as Samples 1-1 to 1-6 in terms of content of elemental sulfur.

Batteries of Comparative examples 1 to 3 (10 batteries for each Comparative example) were produced as in Example 1 except that elemental sulfur was not added.

### <Evaluation of batteries>

Each battery was subjected to a charge-discharge cycle test to evaluate the charge-discharge cycle capability. The charge-discharge cycle test was performed in which a charge and a discharge were defined as a single cycle, a cutoff voltage was 3.0 to 4.2 V, and a current density was 0.05 mA/cm². The number of batteries that operated for 100 or more cycles with stability among 10 batteries was used as an indicator of the charge-discharge cycle capability. The results are described in Table I.

Each battery was further measured in terms of a voltage drop for 60 seconds after the initiation of the first discharge in the charge-discharge cycle test and the internal resistance of the battery was calculated. The results are also described in Table I.

Each battery was also measured in terms of the content of elemental sulfur in the solid electrolyte layer. The content of elemental sulfur in the solid electrolyte layer was measured in a manner described below (refer to the paragraph 0034 of PTL 5: Japanese Unexamined Patent Application Publication No. 2009-93995). The results are also described in Table I.

To measure the content of elemental sulfur, a solid electrolyte layer is separately formed on a glass substrate. The composition of this solid electrolyte layer is analyzed with an X-ray photoelectron spectroscopy (XPS analyzer, ESCA5400MC manufactured by ULVAC-PHI, Inc.) to determine the number of moles (A) of all the elements constituting the solid electrolyte layer. At this time, the number of moles of sulfur may be determined regardless of valence. Subsequently, 1 g of the solid electrolyte layer on the glass substrate is sampled and placed in a glass vessel; 20 ml of an organic solvent (dehydrated toluene) is added to the glass vessel and the resultant mixture is sufficiently stirred (for about 3 hours) with a shaker; the vessel is then left to stand to settle the solid electrolyte; a supernatant liquid in the vessel is sampled with a syringe and filtered through a Millipore filter to completely remove the solid electrolyte to thereby provide a solvent extract into which elemental sulfur is eluted; the amount of elemental sulfur in the extract is determined by gas chromatography to determine the number of moles (B) of elemental sulfur contained in the solid electrolyte layer. By calculating a ratio (B/A) of the number of moles (B) of elemental sulfur in the electrolyte layer to the number of moles (A) of all the elements constituting the solid electrolyte layer, the content of elemental sulfur in the solid electrolyte layer is determined.

**[Table I]**

| Battery | Sulfur content (mol%) | Number of batteries that operated for 100 cycles | Internal resistance (Ω) |
|---|---|---|---|
| Comparative example 1 | 0 | 3 | 92 |
| Comparative example 2 | 1 | 2 | 94 |
| Comparative example 3 | 5 | 2 | 94 |
| Sample 1-1 | 10 | 5 | 96 |
| Sample 1-2 | 30 | 6 | 100 |
| Sample 1-3 | 50 | 6 | 107 |
| Sample 1-4 | 70 | 6 | 124 |
| Sample 1-5 | 90 | 6 | 243 |
| Sample 1-6 | 80 | 6 | 132 |

From the results in Table I, Samples 1-1 to 1-6 in which the content of elemental sulfur in the solid electrolyte layer is 10 mol% or more exhibit a high ratio in terms of stable operation for 100 or more cycles and have high charge-discharge cycle capability. In contrast, Comparative examples 1 to 3 in which the content of elemental sulfur is less than 10 mol% exhibit a low ratio in terms of stable operation for 100 or more cycles and have low charge-discharge cycle capability. Samples 1-1 to 1-4 in which the content of elemental sulfur is 70 mol% or less operate with stability and undergo a slight increase in the internal resistance.

### [EXAMPLE 2]

All-solid-state lithium secondary batteries were produced and evaluated in terms of charge-discharge cycle capability as in Example 1 except that the configuration of the solid electrolyte layer was changed.

In Example 2, the solid electrolyte layer had a configuration in which both of a near-interface region with respect to the positive electrode and a near-interface region with respect to the negative electrode were formed of a solid electrolyte without containing elemental sulfur, and a high-sulfur-content portion was present at an intermediate position in the thickness direction of the solid electrolyte layer. The near-interface regions with respect to the electrodes were each formed so as to have a thickness of 5 µm; the high-sulfur-content portion was formed so as to have a thickness of 5 µm; thus, the total thickness was 15 µm.

By adjusting the amount of elemental sulfur added, batteries in which the contents of elemental sulfur in the high-sulfur-content portions were different (10 batteries for each content) were produced. The batteries were defined as Samples 2-1 to 2-6 in terms of content of elemental sulfur. Each battery was evaluated as in Example 1. The results are described in Table II. The sulfur content in Table II represents the content of elemental sulfur in the high-sulfur-content portion. The content of elemental sulfur in all the near-interface regions was 1 mol% or less.

**[Table II]**

| Battery | Sulfur content (mol%) | Number of batteries that operated for 100 cycles | Internal resistance (Ω) |
|---|---|---|---|
| Sample 2-1 | 10 | 9 | 93 |
| Sample 2-2 | 30 | 9 | 98 |
| Sample 2-3 | 50 | 10 | 99 |
| Sample 2-4 | 70 | 10 | 108 |
| Sample 2-5 | 90 | 9 | 173 |
| Sample 2-6 | 80 | 10 | 111 |

From the results in Table II, Samples 2-1 to 2-6 in which the content of elemental sulfur in both of the near-interface regions with respect to the electrodes is less than 10 mol% and the content of elemental sulfur in the high-sulfur-content portion is 10 mol% or more have higher charge-discharge cycle capability than Samples 1-1 to 1-6 in Example 1. This is probably because the content of elemental sulfur in the near-interface regions with respect to the electrodes is low, hence the factor of inhibiting the movement of lithium ions can be eliminated and the internal resistance of the batteries becomes low to thereby enhance the charge-discharge cycle capability. Samples 2-1 to 2-4 and 2-6 in which the content of elemental sulfur in the high-sulfur-content portion is 80 mol% or less operate with stability and have a slight increase in the internal resistance.

In the Example, solid electrolyte layers in which the content of elemental sulfur varied stepwise were formed by stacking solid electrolytes containing different amounts of elemental sulfur in the thickness direction of the solid electrolyte layers. Alternatively, by monotonically increasing or decreasing the amount of elemental sulfur added or deposited, the content of elemental sulfur in a solid electrolyte layer may be continuously varied in the thickness direction of the solid electrolyte layer.

Examples of a method of measuring the content of elemental sulfur in a solid electrolyte include the above-described method and a method in which the composition of a solid electrolyte layer is analyzed by ion milling of the solid electrolyte layer from its surface in the depth direction with an XPS analyzer to thereby determine the content of elemental sulfur distributed in the depth (thickness) direction.

Note that the present invention is not limited to the above-described embodiments. The above-described embodiments can be appropriately modified without departing from the scope and spirit of the present invention. For example, the thickness of the high-sulfur-content portion and the thickness of the near-interface regions in the solid electrolyte layer may be appropriately changed.

### Industrial Applicability

A nonaqueous electrolyte battery according to the present invention is suitably used as power supplies of cellular phones, notebook computers, digital cameras, electric vehicles, and the like. A solid electrolyte for a nonaqueous electrolyte battery according to the present invention is suitably applicable to, for example, the field of all-solid-state lithium secondary batteries.

### Reference Signs List

- 1: solid electrolyte layer (high-sulfur-content portion)
- S: sulfur

## Claims

1. A nonaqueous electrolyte battery comprising a positive electrode, a negative electrode, and a solid electrolyte layer interposed between these electrodes,
wherein the solid electrolyte layer includes a high-sulfur-content portion containing 10 mol% or more of elemental sulfur.

2. The nonaqueous electrolyte battery according to Claim 1, wherein a content of elemental sulfur in the solid electrolyte layer varies stepwise or continuously in a thickness direction from one of the electrodes to another one of the electrodes, and
in the solid electrolyte layer, at least one of a near-interface region with respect to the positive electrode and a near-interface region with respect to the negative electrode contains less than 10 mol% of elemental sulfur, and another region of the solid electrolyte layer includes the high-sulfur-content portion.

3. The nonaqueous electrolyte battery according to Claim 2, wherein, in the solid electrolyte layer, both of the near-interface region with respect to the positive electrode and the near-interface region with respect to the negative electrode contain less than 10 mol% of elemental sulfur, and a region at an intermediate position in the thickness direction includes the high-sulfur-content portion.

4. The nonaqueous electrolyte battery according to any one of Claims 1 to 3, wherein the solid electrolyte layer is composed of a sulfide-based solid electrolyte.

5. The nonaqueous electrolyte battery according to any one of Claims 1 to 4, wherein the negative electrode is composed of metallic lithium.

6. A solid electrolyte for a nonaqueous electrolyte battery, comprising a high-sulfur-content portion containing 10 mol% or more of elemental sulfur.

7. The solid electrolyte for a nonaqueous electrolyte battery according to Claim 6, wherein a content of elemental sulfur varies stepwise or continuously in a thickness direction from a front surface to a back surface of the solid electrolyte, and
at least one of a front-surface-side region and a back-surface-side region contains less than 10 mol% of elemental sulfur, and another region includes the high-sulfur-content portion.

8. The solid electrolyte for a nonaqueous electrolyte battery according to Claim 7, wherein both of the front-surface-side region and the back-surface-side region contain less than 10 mol% of elemental sulfur, and a region at an intermediate position in the thickness direction includes the high-sulfur-content portion.
